# EUROPEAN PATENT APPLICATION

(11) **EP 4 810 311 A1**
(43) Date of publication of application: **23.09.2026**
(21) Application number: 26466002.8
(22) Date of filing: 03.03.2026
(51) Int. Cl.: B60L 58/00, B60L 9/00, B60L 50/00

(54) **A TRACTION DRIVE OF ELECTRICALLY PROPELLED VEHICLES**

(30) Priority: 19.03.2025 CZ 20250099; 19.03.2025 CZ 202542693 U
(71) Applicant: SKODA TRANSPORTATION a.s., 301 00 Plzen (CZ)
(72) Inventor: Srámek, Milan, 301 00 Plzen - Radobycice (CZ)
(74) Representative: Plicka, Josef

(57) **Abstract**

The present invention concerns a traction drive of electrically propelled vehicles. The essence of this traction drive comprise an arrangement in which at least one low voltage traction motor (2) connected to a low voltage traction converter (5) itself being connected to a traction battery (3), and at least one high voltage traction motor (1) connected to a high voltage traction converter (4), are interconnected to each other via a connecting converter (6).

## Description

### Technical field

The present invention concerns the arrangement of the traction drive and its use on traction vehicles, in particular on battery-catenary electrical units, where it is possible to profit from the advantages of their full installed power even when operating on an unelectrified track and at the same time to ensure saving of traction power.

### Background art

Prior art for vehicles with on-board traction batteries, and/or for vehicles powered by several voltage systems, i.e. multisystem vehicles that use a combination of the common traction standards, especially DC 1.5 kV and 3 kV, and AC 15 kV, 16.7 Hz and 25 kV, 50 Hz, where similar power values are required both in the catenary powered mode and in the traction battery powered mode, is based on the solution where energy for the traction circuits is suitably converted to one common system, i.e. from the point of view of the voltage level in the traction circuits of the vehicle either to the high voltage, derived from the voltage of the catenary, e.g. DC 3 kV or 1.5 kV, or the low voltage, derived from the voltage of the intermediate circuit of the traction converter in the single-phase power supply and/or from the voltage of the traction battery, for example 0.6 to 1 kV.

In these cases, a suitable power conversion is ensured by the traction converter which needs to be dimensioned for full transmitted power of the vehicle so that the vehicle has adequate performance and acceleration characteristics. The full dimension of the converters and circuits has a significant weight, energy, maintenance and cost consequences, since higher power devices are larger and more expensive. These negative impacts are then even more significant when the energy conversion is carried out using a so-called galvanic isolation. In this case, the battery circuits are separated from the potential of the catenary by galvanization, so that in a case of a transitional event, e.g. overvoltage, the potential of the catenary cannot reach the traction battery, which generally increases safety.

Another option in the prior art is based on high voltage, derived from the voltage of the catenary, in case of which the traction circuits are powered during operation either with higher voltage from catenary and thus with higher performance, or with lower voltage from the traction battery. However, in comparison to the catenary powered mode, it is not possible to achieve full performance in the traction battery powered mode.

### Summary of the invention

The above mentioned drawbacks of the prior art are eliminated by the traction drive according to the particular connection arrangement. Its subject matter lies in the fact that within a traction drive of electrically propelled vehicle comprising at least two traction motors, each of said at least two traction motors is working with different nominal voltage, wherein at least one low voltage traction motor, connected to a low voltage traction converter, itself being connected to the traction battery, and at least one high voltage traction motor, connected to the high voltage traction converter, are interconnected via a connecting converter.

Within a DC vehicle, the input circuits of a direct current system, comprising a direct current main switch and an input choke, are connected in front of the connecting converter and the high voltage traction converter.

In addition, within a multi-system vehicle, the input circuits connected in front of the connecting converter and the high voltage traction converter comprise an input system switch, an AC main switch, a traction transformer, an input traction converter and an output switch, the common contact of which is either on the AC or DC part of the input traction converter.

Another possibility is to design a traction transformer with different voltages of secondary windings, whereby the higher voltage winding of the traction transformer is connected with the high voltage input traction converter, and further with the intermediate circuit of the high voltage traction converters and with at least one high voltage traction motor, while the lower voltage winding of the traction transformer is connected to the low voltage input traction converter, low voltage traction converter and to at least one low voltage traction motor, wherein the traction battery is connected to the intermediate circuit of the low voltage traction converters, wherein the intermediate circuit of the high voltage traction converters and the intermediate circuit of the low voltage traction converters are interconnected to each other via a connecting converter.

Thus, in one traction vehicle there are combined traction motors of different nominal voltages, whether the same or different mechanical embodiments or types, which are connected to the respective traction converters also of different nominal voltages, the aim of which is to convert only a minimum of energy in the traction converter interconnecting both groups, where energy losses are generated. Another option is the use of a single-type traction motor, but with such a design implementation of switching, either external or realised within the motor itself, which enables operation of the motor with two different operation voltages.

This technical solution, especially when used in DC and AC powered vehicles as mentioned above, or in solely DC powered vehicles, allows to achieve higher efficiency of traction drive in both driving and braking in different modes of the vehicle power supply, i.e. when powered from a catenary or from a traction battery.

In the catenary mode, during partial loads of the drive, covered by the traction motor or motors pertaining to the group of higher voltage traction converters and motors, the high voltage part of the drive is primarily utilized, while the connecting converter between the two groups is in operation only when the power needs to be higher than what is covered by the high voltage group itself.

Similarly, in the battery mode, during partial loads of the drive, covered by the traction motor or motors pertaining to the group of lower voltage traction converters and motors, the low voltage part of the drive is primarily used, while the connecting converter between the two groups is in operation only when the power needs to be higher than what is covered by the low voltage group itself.

Analogously to the driving mode when the energy flow is oriented to the traction motors, this connection arrangement also operates in the electric braking mode, except that in addition to the goal of minimizing the energy flow through the connecting converter between the two voltage groups, the next optimization parameter of the vehicle control can be, for example, the immediate state of charge of the traction battery.

Because the energy flow through the connecting traction converter interconnecting both groups is minimized, energy savings will occur. Similarly, the maximum power to which the connecting converter is sized for corresponds to a portion, for example half, of the total installed power of the vehicle, which means that the weight, energy loss and maintenance requirements of the converter are correspondingly minimized. Therefore, a vehicle equipped with the described arrangement of the components of the traction circuit according to the invention offers a longer run in the battery mode at the same battery capacity as compared to prior art solutions.

For the full performance of the vehicle while operating on an unelectrified track, it is sufficient to use a partial, typically half power of the traction converter which interconnects the components of both the voltage groups. Its lower power therefore allows lower volume and weight, i.e. lower cost, wherein lower dimension is associated with relatively lower losses, and thus lower consumption for cooling the converter. The lower dimension of the converter thus results in a lower volume of maintenance, again with a lower cost.

The energy of the traction battery is used more efficiently and the lifetime of the traction battery is increased, since the lower depths of discharge correspond to higher numbers of loading cycles of the traction battery.

The lower dimension of the connecting converter on the vehicle equipped with the traction batteries provides also conditions for increasing the range of such a vehicle because the spaces which would otherwise need to be used for a larger traction converter can be used for larger volume of traction batteries allowing longer travel of the vehicle outside of the electrified section of the track.

Thus, there is a better utilization of the connecting converter that is used both in the catenary and off-catenary mode of the vehicle, not, for example, in the battery mode only.

With this technical solution it is possible, in the zone of lower than the nominal voltages of DC systems, to provide the energy flow from the traction battery to the traction circuits of the vehicle operating under DC catenary, thus compensating for the voltage drop in the catenary, and to improve the voltage ratios in the traction supply network while minimizing the losses in the connecting converter.

### Brief description of the drawings

An example of an embodiment of the technical solution of the traction drive according to the invention is shown in the attached FIG. 1, which schematically shows the connection of individual components of the traction drive of electrically propelled vehicles in the embodiment of the DC vehicle. FIG. 2 schematically represents the solution according to the invention in case of a two-system vehicle operating with DC and AC voltage and FIG. 3 shows a variant for a two-system vehicle, where the low and high voltage circuits are separated also on the input side at the level of the traction converter and a separate low voltage rectifier.

### Detailed description of the invention

The embodiment of the traction drive according to the invention is used, for example, in a battery-catenary unit for regional transport, which combines electrified sections of the track where one of the DC systems 3 and/or 1.5 kV, or another less frequently used DC voltage, possibly in combination with one or more AC systems is used, and unelectrified sections of the track, where the traction drive uses energy of traction batteries, possibly in vehicles with so-called hydrogen chain range extenders, powered by hydrogen burning.

In this particular embodiment, the unit is equipped with four traction motors, two of which are of the high voltage design and two are of the low voltage design. In order to minimize the number of serviced parts and the design and manufacture of traction motors, the motors may be considered mechanically identical, only with the difference in connection of the internal windings, which is an advantage, not a condition of the described connection arrangement. The nominal power of the traction motors is considered identical, which again does not represent a condition of the invention.

Important components of the traction drive are in closed blocks either on the roof or under the floor of the train or inside its machine room.

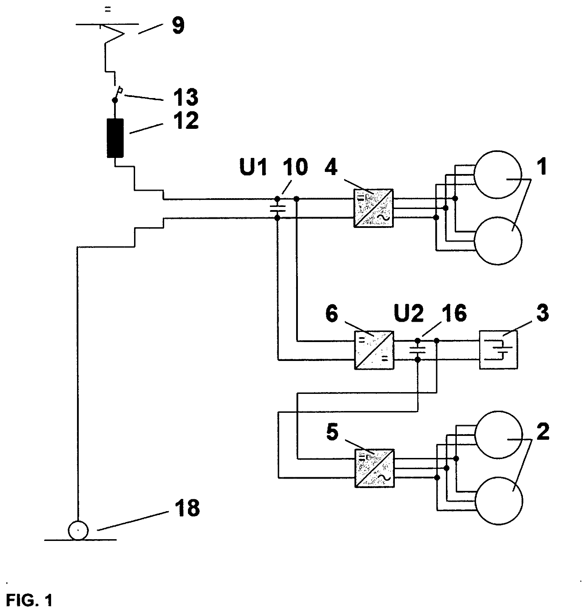

As shown in Fig. 1, first block of the high voltage traction converter 4 aliments high voltage traction motors 1 and thus forms a high voltage group, the second block of the low voltage traction converters 5 aliments low voltage traction motors 2 and thus forms a low voltage group. In the catenary powered mode, the high voltage group is alimented through a pantograph 9, a DC main switch 13 and an input choke 12, the power circuits of the vehicle being electrically connected to the rails by means of axle collectors 18.

The low voltage group is connected to the traction battery 3. In order to charge the traction battery 3, or, in a catenary powered mode, in order to aliment the low voltage group, the connecting converter 6 is used, which suitably transforms the voltage U1 of capacitors of the intermediate circuit 10 of the high voltage traction converters onto the voltage U2 of capacitors of the intermediate circuit 16 of the low voltage traction converters, or possibly the opposite, in the electrodynamic braking mode, when the voltage U2 of the low voltage group is transformed onto the voltage U1 of the high voltage group.

The unit for regional transport is characterized by the highest variable load of the traction drive from all railway vehicles. This load is characterized by cycles of start - drive - coast - break - stop phases. In particular, a drive phase is characterized by only partial load of the traction drive, when only partial performance is sufficient to overcome the driving resistance of the vehicle. Only one traction converter, or so-called individual power supply of the motors by means of a single converter plus one traction motor, is sufficient.

Practically, when operating under a catenary, for example with a DC power of 3 kV, the main intermediate circuit 10 of the high voltage traction converters is being alimented by the voltage of the catenary. This voltage is powering the high voltage group. The low voltage group is alimented from the catenary via the connecting converter 6, which convert the energy for only one low voltage group, which, with respect to the aforementioned identical power of the traction motors, represents approximately half power.

In case of operation powered by the traction battery 3, which level or utilization, respectively, represent an essential indicator of the operation on unelectrified lines, the low voltage group is alimented directly from the traction battery 3 via the low voltage traction converter 5 without losses in other converters, and when higher traction force/power for the acceleration is required, or when full vehicle power is required, the energy can flow also through the connecting converter 6 to the high voltage group. Thus, in this case, the energy losses of the traction battery 3 are approximately half when compared to the state where the entire traction drive comprises only the high voltage components and, in the battery powered mode, the connecting converter 6 would convert all the train power to U1 voltage. Also, if the entire traction drive operates with the U2 voltage, the connecting converter 6, in the catenary powered mode, would have to convert energy for all traction motors, again with higher losses.

In the electrodynamic braking mode, the energy of the high voltage group flows primarily to the catenary, but, according to the state of charge of the traction battery 3 or voltage ratios in the catenary, it can flow primarily through the connecting converter 6 to the traction battery. The energy of the low voltage group flows primarily from the low voltage traction motors 2 or the low voltage traction converters 5 and the capacitors of the intermediate circuit 16 of the low voltage traction converters to the traction battery 3, but it can flow through the connecting converter 6 to the intermediate circuit 10 of the high voltage traction converters and the catenary.

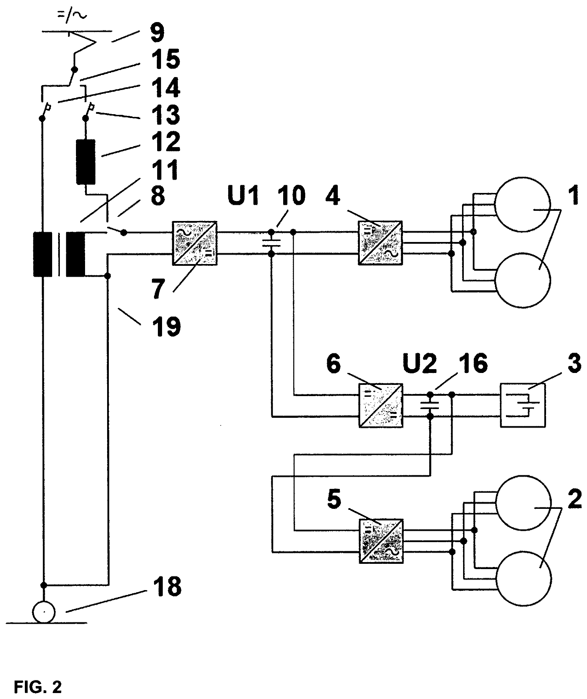

In a multi-system vehicle with the above-described example of circuit design, as shown in FIG. 1, the input circuits of the alternating current power supply, a simplified diagram of which is shown in FIG. 2, precede. Here it is also possible to achieve all the described advantages and savings, and the benefit of their use occurs mainly in combined operation, when a part of the vehicle shift is executed on an electrified track and a part of the vehicle shift is executed on an unelectrified track. The current is passed to the rails through a DC link 19.

In a single phase power supply, the high voltage group is alimented via the input switch 15 of the system, the AC main switch 14, and the traction transformer 11. Its secondary part is connected via the output switch 8 to the high voltage input traction converter 7, which is then followed up with the circuits described above.

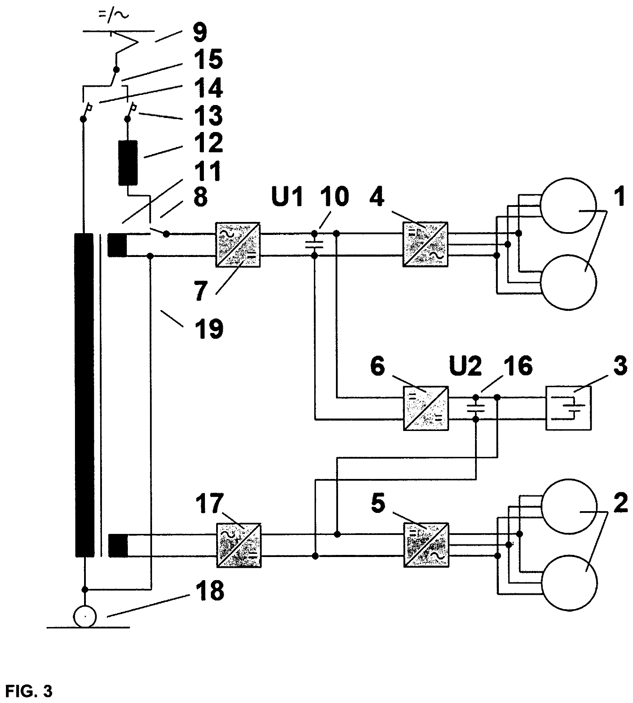

Another method represented in FIG. 3 still further extends the principle described in connection with FIG. 1 and FIG. 2. Here, the principle of separation of the intermediate circuits or individual traction groups is already applied to the traction transformer 11 and at the level of the separated high voltage input traction converters 7 and low voltage input traction converters 17. In such a case, the energy savings would be increased by the fact that even during operation and charging of the battery on the AC system, a part of the energy can be obtained directly from the transformer and not via the connecting converter 6, which is still needed for operation of the vehicle on the DC system.

A variant of the circuit arrangement according to FIGS. 2 and 3, which does not influence the functional properties of the circuit arrangement according to the invention, represents the situation where the output switch 8 of the system would be connected to the high voltage input traction converter 7 and therefore would be on its DC side with voltage U1. Then, the system output switch 8 would supply the voltage beyond the input choke 12 directly into the intermediate circuit 10 of the high voltage traction converters.

Another embodiment of the circuit arrangement according to FIGS. 2 and 3, which does not influence the functional properties of the circuit arrangement according to the invention, represents the situation is where the DC link 19 is already on the side of the intermediate circuit 10 of the high voltage traction converters with voltage U1.

Another embodiment of the circuit arrangement according to FIGS. 1, 2 and 3, which again does not affect the functional properties of the circuitry according to this invention, represents the situation where the traction battery 3 with the accessories would be preceded by a separate control converter.

In the same manner, other variants of the described connection arrangement according to FIGS. 2 and 3, represent the situation in which selected converters, typically a high voltage traction converter 4, a high voltage input traction converter 7 shown in FIGS. 2 and 3, a low voltage traction converter 5 and a low voltage input traction converter 17 shown in FIG. 3, and, optionally, a connecting converter 6 shown in FIGS. 2 and 3, are combined into common converter blocks in order to simplify maintenance, to reduce their space requirements and/or their cooling requirements, which is again the advantage, not the condition of the functionality of the connection arrangement described above.

### Industrial applicability

The present invention can be used in all applications, where a solution of traction drive for a vehicle with a system of 3 kV and/or 1.5 kV DC voltage or other less frequently used DC voltage is required, or where the voltage of the catenary systems significantly deviates from the most typical voltage band of currently commercially available traction batteries with nominal voltages of 0.6 to 1 kV. This technical solution is suitable for multi-system vehicles where one of the systems is a direct current system. It is therefore useful not only in train units, but also in locomotives or infrastructure maintenance vehicles, or in tram-train type vehicles or metro units which pass to the railway infrastructure.

### List of reference signs

1 - high voltage traction motor
2 - low voltage traction motor
3 - traction battery
4 - high voltage traction converter
5 - low voltage traction converter
6 - connecting converter
7 - high voltage input traction converter
8 - output switch
9 - pantograph
10 - intermediate circuit of the high voltage traction converters
11 - traction transformer
12 - input choke
13 - DC main switch
14 - AC main switch
15 - input switch
16 - intermediate circuit of the low voltage traction converters
17 - low voltage input traction converter
18 - axle collector
19 - DC link

## Claims

1. A traction drive of electrically propelled vehicles comprising at least two traction motors operating with different nominal voltages, **characterized in that** at least one low voltage traction motor (2), connected to a low voltage traction converter (5) itself being connected to a traction battery (3), and at least one high voltage traction motor (1), connected to a high voltage traction converter (4), are interconnected to each other via a connecting converter (6).

2. The traction drive according to the claim 1, **characterized in that** input circuits of a direct current system, comprising a direct current main switch (13) and an inlet choke (12), are connected upstream of the connecting converter (6) and the high voltage traction converter (4).

3. The traction drive according to the claim 1, **characterized in that** input circuits, containing the input switch (15) of the system, the alternating main switch (14), the traction transformer (11), the input traction converter (7) and the output switch (8), the common contact of which is either on the AC or DC part of the input traction converter (7), are connected upstream of the connecting converter (6) and the high voltage traction converter (4).

4. The traction drive according to claims 1 and 3, **characterized in that** the traction transformer (11) is provided with different voltages of secondary windings, whereby the higher voltage winding of the traction transformer (11) is connected with a high voltage input traction converter (7) and further with an intermediate circuit (10) of the high voltage traction converters, and with at least one high voltage traction motor (1), while the lower voltage winding of the traction transformer (11) is connected with a low voltage input traction converter (17), wherein the intermediate circuit (10) of the high voltage traction converters and the intermediate circuit (16) of the low voltage traction converters are both interconnected via a connecting converter (6).
